# EUROPÄISCHE PATENTSCHRIFT

(11) **EP 0 950 876 B1**
(45) Veröffentlichungstag und Bekanntmachung des Hinweises auf die Patenterteilung: **17.10.2001**
(21) Anmeldenummer: 98124102.9
(22) Anmeldetag: 18.12.1998
(51) Int. Cl.: G01D 5/241, G01B 7/30

(54) **Kapazitiver Winkelsensor**
Capacitive angle sensor
Capteur capacitif d'angle

(30) Priorität: 16.04.1998 DE 19816810
(43) Veröffentlichungstag der Anmeldung: 20.10.1999
(73) Patentinhaber: Preh-Werke GmbH & Co. KG, 97616 Bad Neustadt a.d. Saale (DE)
(72) Erfinder: Brüggemann, Ulrich, 97618 Heustreu (DE)
(74) Vertreter: Dietrich, Barbara

(56) Entgegenhaltungen:
- EP-A- 0 459 118
- US-A- 5 315 865
- HIRASAWA ET AL.: "OPTIMUM FORM OF CAPACITIVE TRANSDUCER FOR DISPLACEMENT MEASUREMENT" IEEE TRANSACTIONS ON INSTRUMENTATION AND MEASUREMENT, Bd. IM-33, Nr. 4, Dezember 1984 (1984-12), Seiten 276-280, XP002108951 NEW-YORK, USA

## Beschreibung

Die Erfindung betrifft einen kapazitiven Winkelsensor nach dem Oberbegriff des Patentanspruchs 1.

Winkelsensoren müssen, vorgegeben durch den beengten Bauraum und die nahe beieinanderliegenden Befestigungspunkte, einen kleinen Rotordurchmesser haben. Damit die Kapazität der Meßkondensatoren hinreichend groß ist, ist ein geringer Abstand der Kondensatorplatten erforderlich. Vibrationen und große Temperaturschwankungen, welche vom Verbrennungsmotor auf den Sensor einwirken, erfordern eine vibrationsfeste und verzugfreie Ausführung des Sensors. Es darf keine durch Verzugskräfte auftretende partielle Veränderung des Abstandes der Kondensatorplatten entstehen. Das Dielektrikum darf sich verändern, muß aber zumindest innerhalb der Meßperiode hinreichend konstant sein. Damit ein kapazitiver Sensor berührungsfrei arbeitet, wird das Rotorsignal nicht über einen Schleifer, sondern über einen in Reihe gestalteten Auskoppel-Kondensator mit der Elektronik verbunden.

Aus der DE 43 13 886 A1 ist ein kapazitiver Positions- und Winkelsensor bekannt, der aus zwei gegeneinander beweglichen Elektrodenträgern besteht. Auf jeweils einem Elektrodenträger sind sich gegenüberstehende Elektroden angeordnet, die einerseits eine sensorische Kapazität und andererseits eine Koppelkapazität bilden. Mindestens eine Elektrode der Koppelkapazität ist mit einer verschleißfesten metalloxidfreien Passivierungsschicht bedeckt, so daß beim Zusammenbau der beiden Elektrodenträger zu einem Sensor diese Passivierungsschicht eine stabile Abstützung der beiden beweglichen Elektrodenträger gewährleistet und gleichzeitig ein Luftdielektrikum einschließt.

Die DE 43 22 750 A1 offenbart einen kapazitiven Drehwinkelsensor, welcher aus einer drehfest mit einer Sensorwelle verbundenen Rotorscheibe und mindestens einer, am Sensorgehäuse fixierten Statorscheibe besteht, die beide zueinander planparallel ausgerichtet sind und auf der einander zugewandten Seite Elektrodenstrukturen aufweisen. Auf den Elektroden der drehwinkelabhängigen Kapazität ist zur Realisierung des Elektrodenabstandes eine dielektrische Schicht aufgebracht, die aus einem PTFE-Gleitlack besteht. Sowohl die Statorscheibe als auch die Rotorscheibe sind innerhalb des Sensorgehäuses auf der Sensorwelle zentrisch gelagert.

Einen Drehwinkelsensor vom Kapazitätstyp offenbart die DE 44 14 529 C2. Hierbei weist der Drehwinkelsensor zwei feste, durch Zwischenräume geteilte Elektroden sowie eine dritte drehbeweglich gelagerte und ebenfalls durch einen Zwischenraum geteilte Elektrode auf.

Die US 5,681,990 offenbart einen kapazitiven Sensor zur Bestimmung der Stellungsposition einer Drosselklappe. Dieser Sensor weist eine bewegliche Elektrodenplatte sowie eine Ausgangselektrode auf. Auf der beweglichen Elektrodenplatte sind leitende und nichtleitende Segmente aufgebracht, die in Richtung der Ausgangselektrode weisen. Zwischen beiden Elektroden befindet sich ein Rotor, an dessen Umfang ein Rand angebracht ist, um einen definierten Abstand der Elektroden innerhalb des Sensors zu gewährleisten.

Aus der EP 0 459 118 A1 ist ein kapazitiver Stellungsgeber bekannt, der vorzugsweise aus einer Rotor- und Statorplatine aus isolierendem Material, beispielsweise Keramik, besteht. Auf diesen Platinen sind die Elektroden aufgebracht. Die Rotor- und Statorplatine sind dabei zueinander beabstandet, wobei die Elektrodenstrukturen zueinander weisen.

Aus Hirasawa et al.: ,OPTIMUM FORM OF CAPACITIVE TRANSDUCER FOR DISPLACEMENT MEASURMENT' IEEE TRANSACTIONS ON INSTRUMENTATION AND MEASUREMENT, Bd. IM-33, Nr. 4, Dezember 1984 (1984-12), Seiten 276-280, XP002108951 NEW-YORK, USA, ist der Zusammenhang zwischen optimaler Form und Abstand der Elektroden eines kapazitiven Sensors zueinander für eine optimale Messung entnehmbar.

In der US 5,315,865 ist ein kapazitiven Drehwinkelgeber offenbart, der für die Gewährleistung eines minimalen aber konstanten lichten Plattenabstandes einen Abstandhalter unmittelbar oder mittelbar zwischen den Trägerplatten vorsieht.

Der Erfindung liegt die Aufgabe zugrunde, einen kapazitiven Winkelsensor anzugeben, bei dem trotz Vibration und Temperaturbeeinflussung ein Rotor verzugsfrei und mit gleichem Abstand zum Stator geführt wird.

Gelöst wird die Aufgabe durch die Merkmale des Patentanspruchs 1.

Der Erfindung liegt die Idee zugrunde, für einen Stator und einen Rotor jeweils ein Keramikplättchen als Elektrodenträger zu nutzen. Diese Keramikplättchen liegen ohne Abstand plan aufeinander, wodurch gleichzeitig ein Lagereffekt erreicht wird.
Die Kondensatorflächen sind als Elektrodenstrukturen auf der Rückseite der Keramikplättchen aufgedruckt, so daß sich die Elektroden beim Zusammenbau zu einem Sensor auf den jeweils abgewandten Seiten des Stators und des Rotors befinden. Der Rotordurchmesser selbst ist klein gehalten und kann weniger als 30 mm betragen. Beide Keramikplättchen übernehmen auch die Funktion eines dielektrischen Koppelmediums, wobei bei einer Dielektrizitätskonstante εᵣ von ca. 8 sowie einer Standarddicke der Keramikplättchen von 0,63 mm, dieses einer Dielektrizitätskonstante eines Luftkondensators mit einem Plattenabstand von 0,15 mm entspricht. Die Keramik weist eine gute Standardqualität auf, so daß das Plananliegen der beiden Plättchen erreicht wird.

Durch den besonderen Ausdehnungskoeffizienten der Keramik kann der Sensor auch bei höheren Temperaturen eingesetzt werden. Der Temperaturbereich liegt hierbei zwischen-40°C und +150°C.

Vorteilhafte Ausführungen sind in den abhängigen Patentansprüchen enthalten.
So kann eine Auswerteelektronik auf das Statorkeramikplättchen direkt aufgebracht werden. Da kapazitive Weg- und Winkelsensoren sehr empfindlich gegenüber polaren Flüssigkeiten sind, wie beispielsweise Wasser, wird beim vorliegenden Aufbau dieses Problem dadurch gelöst, daß zwischen den beiden Keramikplättchen ein Gleitmittel, wie beispielsweise ein Öltropfen, gebracht wird. Hierdurch wird verhindert, daß sich Feuchtigkeit zwischen den beiden Keramikplättchen niederschlagen kann. Neben der Verbesserung der Gleiteigenschaft wird hierdurch auch ein Lufteinschluß verhindert, welcher die absolute Kapazität verkleinern kann. Außerdem ist es möglich, das Sensorgehäuse zusätzlich auszuschäumen oder auszugießen, so daß weder Feuchtigkeit noch Schmutz die elektrischen Felder im Sensorgehäuse verändern können. Zur Abschirmung gegen externe elektrische Felder kann das Gehäuse aus leitfähigem Material bestehen oder mit leitfähigen Materialien beschichtet sein.

Anhand eines Ausführungsbeispiels mit Zeichnung soll die Erfindung näher erläutert werden.

Es zeigen:
Fig.1
   einen Schnitt durch einen Sensor,
Fig.2
   eine Draufsicht auf einen Elektrodenträger,
Fig.3
   eine Draufsicht auf einen weiteren Elektrodenträger.

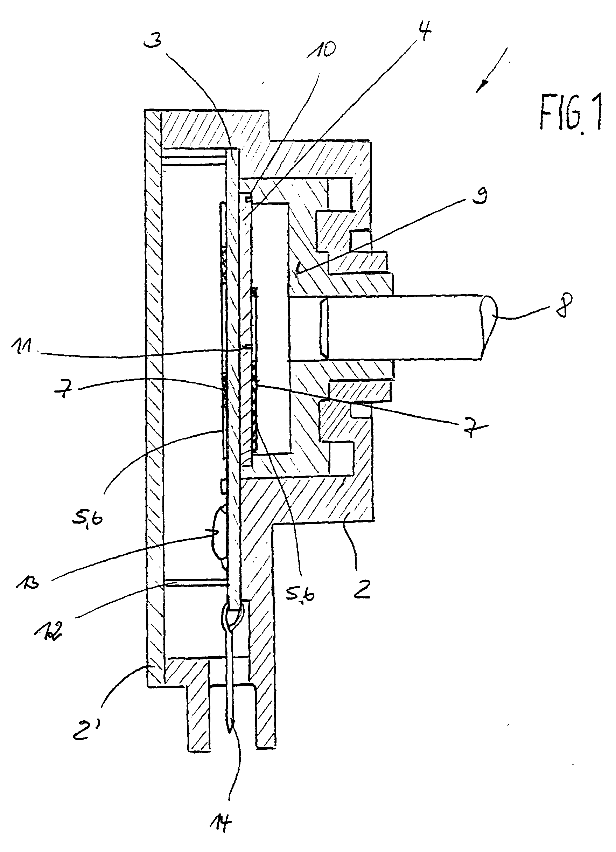

Gemäß der Fig.1 besteht der erfindungsgemäße Winkelsensor 1 aus einem Sensorgehäuse 2 mit einem das Sensorgehäuse 2 abschließenden Deckel 2'. In dem Sensorgehäuse 2 sind ein Stator 3 als ein Elektrodenträger und ein Rotor 4 als ein weiterer Elektrodenträger angeordnet, die jeweils aus einem Keramikplättchen bestehen und planparallel aufeinander aufliegen. Die Keramikplättchen bestehen vorzugsweise aus einer Al₂O₃ - Keramik. Dabei befinden sich auf den jeweils abgewandten Seiten des Stators 3 und des Rotors 4 aufgedruckte Elektrodenstrukturen von Elektroden 5 und 6 als sensorische Kapazitäten sowie einer Koppelkapazität 7( Fig.2 und 3).
Der Rotor 4 ist mit einer Sensorwelle 8 über einen Adapter 9 mechanisch verbunden und verdrehbar gehalten. Die Sensorwelle 8 ist mit dem Adapter 9 fest verbunden sowie über diesen Adapter 9 am Sensorgehäuse 2 drehbar befestigt und nach außerhalb des Sensorgehäuses 2 geführt, wo die Sensorwelle 8 drehfest mit einem Meßobjekt gekoppelt ist. Dieses Meßobjekt kann beispielsweise ein Drosselklappenverstellorgan sein, welches nicht weiter dargestellt ist.
Der Adapter 9 greift über kleine Nasen 10 in Ausnehmungen 11 des Rotors 4 ein, so daß ein Verdrehen der Sensorwelle 8 direkt ein Verdrehen des Rotors 4 bewirkt. Der Stator 3 ist über Verbindungselemente 12 mit dem Sensorgehäuse 2, insbesondere mit dem Dekkel 2', verbunden und gegen Verdrehung gesichert.
Der Stator 3 besitzt vorzugsweise eine dem Sensorgehäuse 2 angepaßte Bauform. So kann das Keramikplättchen des Stators 3 eine rechteckige Form aufweisen, wenn das Sensorgehäuse 2 im einzuspannenden Bereich des Stators 3 ebenfalls rechteckig ist.

Auf dem Keramikplättchen des Stators 3 befindet sich vorzugsweise eine Auswerteelektronik 13. Diese Auswerteelektronik 13 generiert ein Signal, das ein Meßergebnis darstellt. Über eine Steckverbindung 14 wird dieses Signal aus dem Winkelsensor 1 zur weiteren Verarbeitung weitergegeben. Die Verbindungselemente 12 als Befestigungsmaßnahmen des Stators 3 am Sensorgehäuse 2 können entfallen, wenn das Sensorgehäuse 2 eine Ausnehmung für die Auswerteelektronik 13 aufweist oder diese nicht auf dem Elektrodenträger aufgebracht ist. Es ist dann lediglich ein Einklicken durch direkte Paßform des Stators 3 in den einzuspannenden Bereich im Sensorgehäuse 2 notwendig.

Zur Verhinderung einer auftretenden Reibkraft zwischen dem Stator 3 und dem Rotor 4 wird beispielsweise vor dem Zusammenbau ein Gleitmittel zwischen beide gegeben, welches die Gleiteigenschaft zwischen den Keramikplättchen, sowie die absoluten Kapazitätswerte verbessert. Gleichzeitig wird ein Eindringen von Feuchtigkeit zwischen den Keramkplättchen verhindert. Zusätzlich kann auch ein Raum zwischen dem Stator 3 und dem Sensorgehäusedeckel 2' ausgeschäumt werden, so daß Feuchtigkeiten allgemein nicht in den Sensor 1 eindringen können.

Durch die Verwendung von Keramikplättchen für den Stator 3 und den Rotor 4 können die Elektrodenstrukturen der Kapazitäten aufgedruckt werden. Dabei bilden die Elektrodenstrukturen des Stators 3 eine der beiden Kondensatorplatten, die Elektrodenstrukturen des Rotors 4 die andere. Die Linearität bzw. Mikrolinearität der Kapazität wird durch das Druckbild, beispielsweise ein Siebdruck, bei der Beschichtung bestimmt. Wichtig ist beim Meßprinzip dieser Art nicht die Schichtdicke, sondern die exakte Ausführung des Randbereiches, da dieser eine Auswirkung auf die Mikrolinearität des Drehkondensators hat.

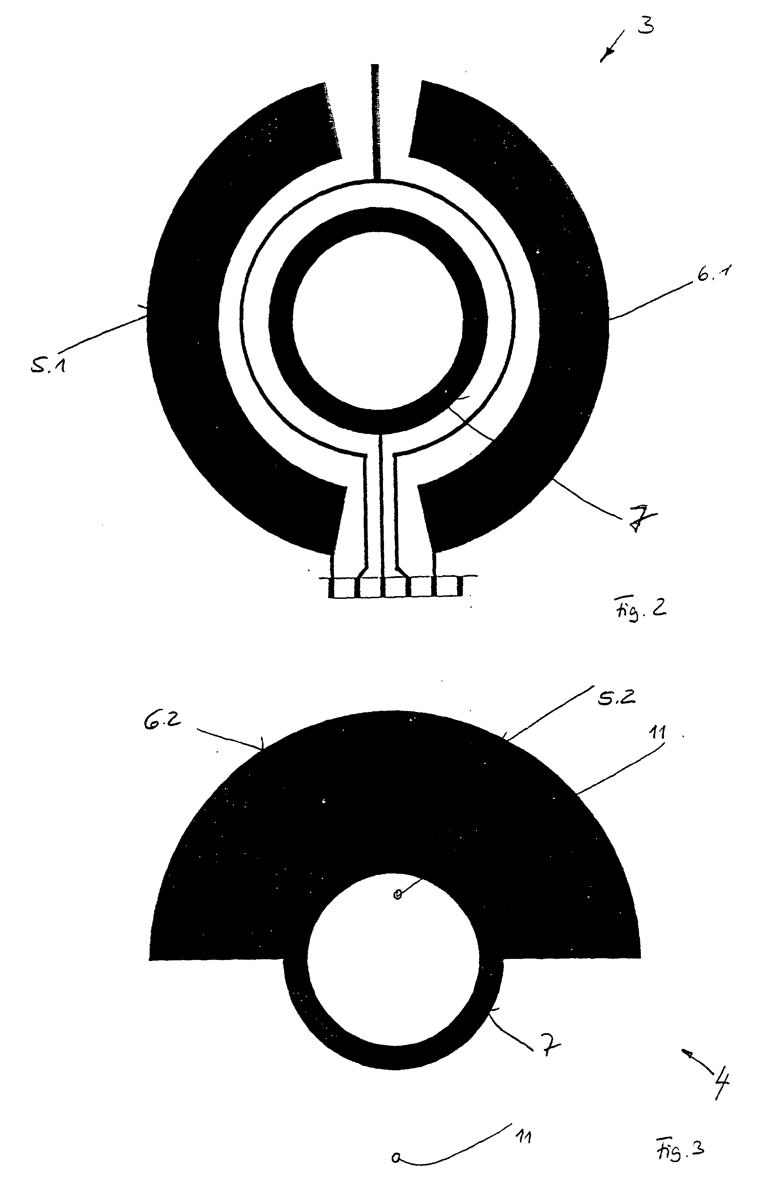

Wie in Fig. 2 dargestellt, befinden sich auf einem der Elektrodenträger, beispielsweise dem Stator 3, die Elektrodenstrukturen der Elektroden 5 und 6 der sensorischen Kapazitäten , die dabei vorzugsweise in Einzelkapazitäten aufgeteilt sind, sowie die der Elektrode 7 als Koppelkapazität.

Auf dem in Fig. 3 dargestellten anderen Elektrodenträger, dem Rotor 4, befindet sich die zu den Elektroden 5, 6, 7 zugehörende Elektrodenstruktur als zweite Kondensatorplatte. Diese, die Kapazitäten bildenden Elektroden, sind alle drei vorzugsweise in einer Elektrodenstruktur zusammen integriert .

Die Anordnung und Aufteilung der Elektroden 5 und 6 ermöglicht eine Verhältnismessung der sich gegenphasig verändernden Kapazitäten. Wird in diesem Sensor nicht die absolute Kapazität, sondern das Verhältnis der beiden Meßkapazitäten zueinander ausgewertet, werden alle Störungen, welche sich auf beide Meßkapazitäten auswirken, kompensiert. Der Meßwert ist somit nicht mehr temperaturabhängig. Durch die gegenphasige Veränderung dieser aufgeteilten Kondensatoren/Kapazitäten ist der Winkelsensor 1 nicht mehr von dem absoluten Wert der sensorischen Kapazitäten abhängig. Es werden hierbei die Effekte der Kapazitätsänderung zueinander ausgenutzt.
Die Auswerteelektronik 13 erhält vom ersten Kondensator, der sich durch die aufgeteilte Elektrode 5.1 des Stators 3 und die Elektrode 5.2 des Rotors 4 bildet, ein Signal und vom zweiten Kondensator, der durch die andere Elektrode 6.1 des Stators 3 und die Elektrode 6.2 des Rotors 4 gebildet wird, ein weiteres Signal , woraus sich ein elektrisches Ausgangssignal mit linearer Abhängigkeit zu den sich verändernden Kondensatorflächen/ Geometrien ergibt. Diese lineare Abhängigkeit ist in weiten Bereichen konstant, das Meβergebnis dadurch genau. Unabhängig von der Stellung der Elektroden 5.2, 6.2 des Rotors 4 und der Elektroden 5.1, 6.1 des Stators 3 zueinander, ist durch die geschlossene Gestaltung der Elektrode 7 auf den Keramikplättchen des Stators3 und des Rotors 4 die Funktion als Kopppelkapazität stets gewährleistet. Diese Koppelkapazität kann auch außerhalb der geteilten Elektroden 5 und 6 angeordnet sein.

## Patentansprüche

1. Kapazitiver Winkelsensor, bestehend aus einem drehfest mit einer Sensorwelle verbundenen Rotor und einem am Sensorgehäuse fixierten Stator , welche parallel zueinander ausgerichtet sind, wobei der Rotor (4) und/oder der Stator (3) als Keramikplättchen ausgeführt sind, **dadurch gekennzeichnet, daß** der Rotor (4) und der Stator (3), planparallel aufeinander liegen, wobei auf deren einander abgewandten Seiten Elektroden-strukturen (5, 6, 7) aufgebracht sind, wobei durch die Keramikplättchen eine dielektrische Schicht gebildet wird.

2. Kapazitiver Winkelsensor nach Anspruch 1, **dadurch gekennzeichnet, daß** der Rotor (4) mit einer Sensorwelle (8) über einen Adapter (9) mechanisch verbunden ist.

3. Kapazitiver Winkelsensor nach Anspruch 2, **dadurch gekennzeichnet, daß** die Sensorwelle (8) über diesen Adapter (9) im Sensorgehäuse (2) drehbar geführt und nach außerhalb des Sensorgehäuses (2) geführt ist.

4. Kapazitiver Winkelsensor nach Anspruch 2, **dadurch gekennzeichnet, daß** der Adapter (9) über Nasen (10) in Ausnehmungen (11) des Rotors (4) eingreift, so daß ein Verdrehen der Sensorwelle (8) ein direktes Verdrehen des Rotors (4) bewirkt.

5. Kapazitiver Winkelsensor nach einem oder mehreren Ansprüchen 1 bis 4, **dadurch gekennzeichnet, daß** der Stator (3) gegenüber dem Sensorgehäuse (2) gegen Verdrehung gesichert ist, wobei der Stator ( 3) vorzugsweise eine dem Sensorgehäuse (2) angepaßte Bauform besitzt.

6. Kapazitiver Winkelsensor nach einem oder mehreren Ansprüchen 1 bis 5, **dadurch gekennzeichnet, daß** ein Raum zwischen dem Stator (3) und einem Sensorgehäusedeckel (2') ausgeschäumt oder vergossen ist, wodurch ein Eindringen von Feuchtigkeiten verhindert wird.

7. Kapazitiver Winkelsensor nach einem oder mehreren Ansprüchen 1 bis 6, **dadurch gekennzeichnet, daß** die Elektrodenstrukturen der Elektroden (5 und 6) als sensorischen Kapazitäten in Einzelkapazitäten aufgeteilt sind.

8. Kapazitiver Winkelsensor nach einem oder mehreren Ansprüchen 1 bis 7, **dadurch gekennzeichnet, daß** sich eine Auswerteelektronik (13) direkt auf dem Keramikplättchen des Stators (3) befindet.

9. Kapazitiver Winkelsensor nach einem oder mehreren Ansprüchen 1 bis 8, **dadurch gekennzeichnet, daß** die Elektrodenstrukturen der Elektroden (5, 6,7) auf den Keramikplättchen des Stators (3) und/oder des Rotors (4) aufgedruckt sind.

## Claims

1. Capacitive angle sensor, comprising a rotor fixedly connected to a sensor shaft, and a stator fixed on the sensor housing, which are aligned parallel to each other, wherein the rotor (4) and/or the stator (3) are constructed as small ceramic plates, **characterised in that** the rotor (4) and the stator (3) lie in planes which are parallel to each other, electrode structures (5, 6, 7) being applied to their sides remote from each other, and a dielectric layer being formed by the small ceramic plates.

2. Capacitive angle sensor according to claim 1, **characterised in that** the rotor (4) is mechanically connected to a sensor shaft (8) by means of an adapter (9).

3. Capacitive angle sensor according to claim 2, **characterised in that** the sensor shaft (8) is directed rotatably in the sensor housing (2) by means of this adapter (9), and is directed outside the sensor housing (2).

4. Capacitive angle sensor according to claim 2, **characterised in that** the adapter (9) engages in recesses (11) of the rotor (4) by means of lugs (10) so that rotation of the sensor shaft (8) causes direct rotation of the rotor (4).

5. Capacitive angle sensor according to one or more of claims 1 to 4, **characterised in that** the stator (3) is secured against rotation with respect to the sensor housing (2), the stator (3) preferably having a structure adapted to the sensor housing (2).

6. Capacitive angle sensor according to one or more of claims 1 to 5, **characterised in that** a space between the stator (3) and a sensor housing cover (2') is filled with foam or is cast, thus preventing penetration of moisture.

7. Capacitive angle sensor according to one or more of claims 1 to 6, **characterised in that** the electrode structures of the electrodes (5 and 6) are divided into individual capacitances as sensing capacitances.

8. Capacitive angle sensor according to one or more of claims 1 to 7, **characterised in that** an electronic evaluation unit (13) is disposed directly on the small ceramic plate of the stator (3).

9. Capacitive angle sensor according to one or more of claims 1 to 8, **characterised in that** the electrode structures of the electrodes (5, 6, 7) are printed onto the small ceramic plates of the stator (3) and/or the rotor (4).

## Revendications

1. Capteur d'angle capacitif, comprenant un rotor relié de manière résistante à la torsion à un arbre de capteur et un stator fixé sur le boîtier de capteur, lesquels sont orientés de façon parallèle l'un à l'autre, le rotor (4) et/ou le stator (3) étant réalisés sous la forme de plaquettes de céramique, **caractérisé en ce que** le rotor (4) et le stator (3) sont situés l'un au-dessus de l'autre avec des faces planes et parallèles, sur les côtés réciproquement opposés desquels sont appliquées des structures d'électrodes (5, 6, 7), une couche diélectrique étant formée par les plaquettes de céramique.

2. Capteur d'angle capacitif selon la revendication 1, **caractérisé en ce que** le rotor (4) est relié de façon mécanique à un arbre de capteur (8) par un adaptateur (5).

3. Capteur d'angle capacitif selon la revendication 2, **caractérisé en ce que** l'arbre de capteur (8) est guidé de façon rotative par cet adaptateur (9) dans le boîtier de capteur (2) et est guidé vers l'extérieur du boîtier de capteur (2).

4. Capteur d'angle capacitif selon la revendication 2, **caractérisé en ce que** l'adaptateur (9) s'engage au moyen d'ergots (10) dans des évidements (11) du rotor(4), de telle sorte qu'une rotation de l'arbre de capteur (8) entraîne une rotation directe du rotor (4).

5. Capteur d'angle capacitif selon une ou plusieurs des revendications 1 à 4, **caractérisé en ce que** le stator (3) est assuré de ne pas tourner par rapport au boîtier de capteur (2), le stator (3) ayant de préférence une forme de construction adaptée au boîtier de capteur (2).

6. Capteur d'angle capacitif selon une ou plusieurs des revendications 1 à 5, **caractérisé en ce qu'**un espace entre le stator (3) et un couvercle de boîtier de capteur (2') est rempli de mousse ou scellé, ce qui empêche une pénétration d'humidités.

7. Capteur d'angle capacitif selon une ou plusieurs des revendications 1 à 6, **caractérisé en ce que** les structures d'électrodes des électrodes (5 et 6) sont réparties sous la forme de capacités sensorielles dans des capacités individuelles.

8. Capteur d'angle capacitif selon une ou plusieurs des revendications 1 à 7, **caractérisé en ce qu**'une électronique d'analyse (13) se trouve directement sur la plaquette de céramique du stator (3).

9. Capteur d'angle capacitif selon une ou plusieurs des revendications 1 à 8, **caractérisé en ce que** les structures d'électrodes des électrodes (5, 6, 7) sont imprimées sur les plaquettes en céramique du stator (3) et/ou du rotor (4).
